# EUROPÄISCHE PATENTSCHRIFT

(11) **EP 4 467 920 B1**
(45) Veröffentlichungstag und Bekanntmachung des Hinweises auf die Patenterteilung: **06.05.2026**
(21) Anmeldenummer: 24177361.3
(22) Anmeldetag: 22.05.2024
(51) Int. Cl.: F41G 7/26, G01S 5/16, G01S 1/70

(54) **ERMITTLUNG EINER RELATIVLAGE EINES FLUGKÖRPERS IN BEZUG AUF EINE ZIELACHSE**
DETERMINATION OF A RELATIVE POSITION OF A MISSILE IN RELATION TO A TARGET AXIS
DÉTERMINATION D'UNE POSITION RELATIVE D'UN MISSILE PAR RAPPORT À UN AXE CIBLE

(30) Priorität: 25.05.2023 DE 102023002139
(43) Veröffentlichungstag der Anmeldung: 27.11.2024
(73) Patentinhaber: Diehl Defence GmbH & Co. KG, 88662 Überlingen (DE)
(72) Erfinder: Wolf, Andreas, 90480 Nürnberg (DE)
(74) Vertreter: Diehl Patentabteilung

(56) Entgegenhaltungen:
- DE-A1- 1 431 217
- DE-A1- 2 618 703

## Beschreibung

Die Erfindung betrifft einen Flugkörper, der von einer Sendeeinheit wegfliegt, wobei die Sendeeinheit währenddessen entlang einer Zielachse ein Laserlenkfeld für den Flugkörper ausstrahlt.

Aus der EP 2 083 243 A2 ist ein Verfahren bekannt zur Ermittlung der Rollwinkellage eines Flugkörpers, insbesondere eines Geschosses oder dergleichen sowie eine entsprechende Vorrichtung. Es ist ein neuartiges Verfahren sowie eine entsprechende Vorrichtung zur Ermittlung der Rollwinkellage zur Verfügung zu stellen, welche eine Ermittlung der Rollwinkellage mit vergleichsweise geringem Aufwand jedoch hoher Genauigkeit ermöglicht, die auch bei größeren Reichweiten einsetzbar sind und gegen Winkelverkippungen des Flugkörpers im Vergleich zur optischen Achse unempfindlich sind. Es wird ein Verfahren mit folgenden Merkmalen vorgeschlagen: Erzeugung eines bewegten Laserstrahlmusters über einen Raumwinkel alpha eines Laserstrahls, innerhalb dem sich der Flugkörper befindet, Erfassung des Laserlichts am Flugkörper an einer seitlich zu dessen Rotationsachse befindlichen Erfassungsstelle, Abgriff des Laserstrahlmusters an der jeweiligen Position der Erfassungsstelle sowie Ermittlung der momentanen Rollwinkellage auf der Grundlage von Dopplereffektbedingten Frequenzverschiebungen an der Erfassungsstelle.

Aus der Offenlegungsschrift DE-OS 26 18 703 ist ein Verfahren bekannt, welches die Steuerung eines in Autorotation befindlichen Geschosses bezüglich einer Achse erlaubt, wobei elektromagnetische Strahlen sehr kurzer Wellenlänge in Form eines amplitudenmodulierten Bündels ausgesandt werden und dieses Bündel durch wenigstens einen Strahlungsdetektor abgetastet wird, welcher auf dem in Autorotation befindlichen Geschoß oder Projektil angeordnet ist, wobei die durch diese Detektoren ausgesandten Signale es ermöglichen, die für die Selbststeuerung des Geschosses bezüglich der durch die Mitte des Bündels und das Ziel definierten Achse notwendigen Daten herzuleiten.

Aus der Offenlegungsschrift DE-OS 1 431 217 ist ein Kurzstreckenflugkörper bekannt mit Flugwegsteuerungen und Mitteln zum Drehen des Flugkörpers um seine Achse während des Fluges, gekennzeichnet durch einen Detektor, der auf infrarote, sichtbare oder ultraviolette Strahlung anspricht und auf dem Flugkörper mit Bezug auf seine Umlaufachse versetzt angeordnet ist, so daß der Detektorausgang, wenn der Flugkörper in einem umlaufenden Strahlungsmuster liegt und mit Bezug auf die Umlaufachse des Musters versetzt ist, eine frequenzmodulierte Komponente einschließt, sowie durch Mittel, die auf die Frequenzmodulation des Detektorausganges ansprechen und so angeordnet sind, daß sie die Flugwegsteuerungen in Abhängigkeit von der Frequenzmodulation durch Steuerung des Flugkörpers in Richtung auf die Musterachse einstellen.

Aufgabe der vorliegenden Erfindung ist es, die Lageerkennung für ein Geschoss zu verbessern.

Die Aufgabe wird gelöst durch ein Verfahren gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Verfahren dient zur bzw. bewirkt die Ermittlung einer Relativlage eines Flugkörpers in Bezug auf eine Zielachse. Die Zielachse entspricht einer Soll-Flugrichtung für zumindest einen Abschnitt der Flugbahn des Flugkörpers. Der Flugkörper muss nicht zwingend ein Lenkflugkörper sein. Er ist jedoch bevorzugt ein solcher, denn so ist es möglich, nicht nur dessen Flugbahn zu kontrollieren, sondern die Flugbahn auch zu korrigieren und den Lenkflugkörper - zumindest auf einem Abschnitt seines Fluges - auf die Soll-Flugbahn zu führen.

Die Erfindung geht dabei davon aus, dass sich der Flugkörper zumindest auf einem Abschnitt seiner Flugbahn in einer ungestörten Sichtlinie, also einem Sichtfeld der bzw. zu einer Sendeeinheit befindet, um von deren Laserlenkfeld erreichbar zu sein. Die Sendeeinheit dient nämlich dazu bzw. ist dazu eingerichtet, das Laserlenkfeld auszustrahlen. Das Laserlenkfeld wird dabei entlang einer Zielachse ausgestrahlt. Die Ausstrahlung findet zumindest zeitweise während der Flugdauer des Flugkörpers statt, muss also nicht während der gesamten Flugdauer des Flugkörpers stattfinden. Ausreichend ist z. B. das Lenkfeld nur in einem Abschnitt der Flugbahn auszusenden, um in diesem Abschnitt den Flugkörper als Lenkflugkörper auf die Zielachse zu führen.

Insbesondere geht die Erfindung davon aus, dass der Flugkörper von der Sendeeinheit wegfliegt bzw. sich von dieser wegbewegt. Dies betrifft dann zumindest eine tendenzielle Flugrichtung / Flugbahn und ist nicht im engen Sinne einer zwangsweise lotrechten Bewegung zu verstehen. Im Fall, dass der Flugkörper eine Lenkmunition ist, ist dies jedoch durchaus zutreffend.

Die Erfindung geht weiterhin davon aus, dass der Flugkörper eine Rollachse bzw. Längsachse aufweist. Diese verläuft insbesondere während des Fluges des Flugkörpers nicht senkrecht zur Zielachse. Insbesondere verläuft die Rollachse - zumindest auf dem Abschnitt seiner Flugbahn, in dem das Laserlenkfeld wirkt und ggf. die Flugbahnkorrektur erfolgt - nahezu (also in einem praktisch realistischen Sinne) parallel zur Zielachse, d. h. deren Winkelabweichung voneinander beträgt allenfalls wenige Grad. Die Tatsache, dass der Flugkörper eine Rollachse aufweist muss nicht zwangsweise bedeuten, dass dieser während des Fluges tatsächlich um die Rollachse rollt. Insbesondere handelt es sich jedoch bei dem Flugkörper um einen solchen, welcher während seines Fluges eine dauerhafte Rollbewegung (Drall) um die Rollachse ausführt, z. B. wenn der Flugkörper eine drallende Lenkmunition ist.

Die Flugbahn des Flugkörpers verläuft von einem Startpunkt zu einem Zielpunkt. Der Startpunkt ist zum Beispiel der Austritt des Flugkörpers (in Form von Munition) aus einer Waffe. Der Zielpunkt ein Auftreffpunkt auf ein zu bekämpfendes Ziel.

Bei dem Verfahren strahlt also die Sendeeinheit das Laserlenkfeld entlang der Zielachse aus. Das Laserlenkfeld weist dabei ein Muster auf. Gemäß dieses Musters variiert eine Intensität des Laserlenkfeldes in Umfangsrichtung um die Zielachse. Das Muster ist an sich ein statisches, also invariantes Muster, welches dem Laserlenkfeld aufgeprägt ist. Zusätzlich rotiert das gesamte Muster um die Zielachse. So entsteht ein Laserlenkfeld mit einem festen, aber rotierenden Muster.

Mit bei dem Verfahren wird außerdem an einer Seite des Flugkörpers an drei unterschiedlichen Messpunkten die jeweilige aktuelle Intensität des Laserlenkfeldes erfasst. Die Seite des Flugkörpers ist eine solche, bei der davon ausgegangen werden kann, dass diese beim Flug des Flugkörpers zumindest auf dem o.g. Abschnitt seiner Flugbahn potentiell von dem Laserlenkfeld beleuchtet ist. Denn nur so ist dessen Erfassung an den Messpunkten möglich. Die Messpunkte weisen jeweils eine bekannte Messlage in Bezug auf die Rollachse am Flugkörper auf. Diese Messlage ist eine Relativlage des Messpunktes zur Rollachse. In dem Verfahren sind also die drei Messlagen der Messpunkte am Flugkörper in Bezug auf die Rollachse bekannt. Mit anderen Worten kann aus der Raumlage der Messpunkte auf die zu ermittelnde Raumlage / Relativlage des Flugkörpers geschlossen werden.

Aus den drei aktuellen Intensitäten, die an den Messpunkten erfasst werden, und den drei bekannten Messlagen wird nun im Verfahren folgendes ermittelt: Zunächst werden aus den drei Messpunkten wenigstens zwei verschiedene Paare von zwei der drei Messpunkte gebildet. Für jeden Messpunkt des jeweiligen Paares wird eine jeweilige Differenz der Polarwinkel des jeweiligen Messpunktes in Bezug auf die Zielachse ermittelt. Ermittelt wird also nur die Differenz der beiden Polarwinkel der beiden Messpunkte des Paares. Die beiden absoluten Polarwinkel der Messpunkte des Paares müssen nicht notwendigerweise bekannt sein. Diese Differenz wird für die wenigstens zwei verschiedenen Paare der Messpunkte ermittelt.

In dem Verfahren wird hieraus, also aus den wenigstens zwei ermittelten Differenzen unter Nutzung der bekannten Geometrieverhältnisse (siehe unten) die Ablage (radialer Abstand) der Rollachse von der Zielachse und der Drehwinkel des Flugkörpers um die Rollachse in Bezug auf einen vorher definierten Roll-Nullwinkel ermittelt. Der Drehwinkel bewegt sich im Bereich von 0° bis 360°. Der Drehwinkel wird hierbei insbesondere auf einen Radialstrahl als Roll-Nullwinkel bezogen, welcher von der Zielachse ausgehend durch den aktuellen Ort der Rollachse jenseits der Rollachse radial auswärts verläuft. Ein Drehwinkel von 0° entspricht daher aus Sicht der aktuellen Rollachse die radial auswärtige Richtung in Bezug auf die Zielachse, ein Rollwinkel von 180° stets der Richtung zur Zielachse hin. So kann der Flugkörper bei zu korrigierender Ablage leicht stets in "180°-Richtung" zur Zielachse hin korrigiert / gelenkt werden.

Als Relativlage wird gemäß dem Verfahren also die aktuelle Ablage von der Zielachse und der aktuelle Rollwinkel in Bezug auf die Zielachse des Flugkörpers ermittelt. Eine Lenkung zur Zielachse hin ist mit diesen beiden Parametern dann auch für drallende Flugkörper stets möglich.

Das Laserlenkfeld bzw. Laserlicht kann sich im sichtbaren oder auch unsichtbaren Spektralbereich (UV, IR) befinden.

Die Erfindung bietet den Vorteil, dass sich das Verfahren zu einem niedrigen Preis umsetzen lässt. Beispielsweise ist für das Verfahren lediglich ein Laser, einfache Fotodioden als Sensoren (Messpunkte), und eine einfache Erzeugung des bewegten Musters durch eine rotierende Musterscheibe nötig. Gemäß dem Verfahren ist die gleichzeitige Bestimmung von Ablage und Rollwinkellage am Flugkörper möglich. Es besteht weitestgehende Unabhängigkeit der Lagebestimmung von der Rollrate des Flugkörpers. Das Verfahren ist robust gegenüber Winkelverkippungen des Flugkörpers (der Rollachse gegenüber der Zielachse).

Gemäß der Erfindung bietet sich die Möglichkeit der gleichzeitigen Bestimmung von Rollwinkellage (Drehwinkel) und Ablage mit vergleichsweise geringem Aufwand und hoher Genauigkeit. Zudem ist das Verfahren nicht von einer konstanten und hohen Rollrate des Flugkörpers abhängig.

Flugkörper sind insbesondere eine 30mm Munition (insb. Munition für den Schützenpanzer "Puma"), eine 35 x 228 mm Munition für Flugabwehrgeschütze oder eine 50 mm Kurskorrekturmunition, z. B. für eine Leichtbaumaschinenkanone.

In einer bevorzugten Ausführungsform wird die Ermittlung der Relativlage ausschließlich im Flugkörper durchgeführt. Somit ist zum Beispiel keine Bodenstation oder externe Einrichtung zur Ermittlung der Relativlage notwendig.

In einer bevorzugten Ausführungsform wird als von der Sendeeinheit potentiell beleuchtete Seite des Flugkörpers dessen Boden oder Heck gewählt. Der Boden ist zum Beispiel ein Boden einer Munition in Form des Flugkörpers. Das Heck zum Beispiel ein Heck eines Flugkörpers in Form einer Rakete oder ähnlichem. Da sich entsprechende Flugkörper in der Regel von einer Basisstation oder Waffe oder Abschussrampe wegbewegen und in der Regel dort eine Zielerfassung stattfindet, ist davon auszugehen, dass dort auch die die Sendeeinheit installiert ist. Heck oder Boden des Flugkörpers werden also am wahrscheinlichsten "automatisch" Richtung Sendeeinheit weisen, so dass dort besonders günstig Messpunkte beleuchtbar sind.

In einer bevorzugten Ausführungsform wird als Muster (betrachtet wird dabei stets eine Querebene zur Zielachse) zumindest in einem Kreisring um die Zielachse ein in Umfangsrichtung regelmäßiges Muster erzeugt. "Zumindest in einem Kreisring" ist so zu verstehen, dass der "Kreisring" insbesondere das gesamte Laserlenkfeld ausfüllt und somit zu einem Vollkreis entartet (Innenradius des Kreisrings ist Null). Es existiert nur ein einziger Kreisring vom Mittelpunkt bzw. Zielachse des Musters bis zum radial äußeren Rand des Musters. Regelmäßige Muster sind besonders einfach zu erzeugen und im Verfahren zu analysieren bzw. auszuwerten. Die Aussagen zu "Zumindest in einem Kreisring" gelten sinngemäß auch für die folgenden Ausführungsformen.

In einer bevorzugten Ausführungsform wird als Muster zumindest in einem Kreisring um die Zielachse ein Speichenmuster erzeugt. Ein Speichenmuster zeichnet sich dadurch aus, dass sich in Umfangsrichtung radial von der Zielachse ausgehende Speichen mit Zwischenräumen abwechseln. Beispielsweise sind "Speichen" so zu verstehen, dass dort Laserlicht einer ersten, zum Beispiel konstanter, Intensität vorhanden ist. In den radial auswärts führenden Zwischenräumen zwischen zwei Speichen ist dann Laserlicht einer zweiten Intensität vorhanden, beispielsweise abgedunkeltes bzw. in der Intensität reduziertes oder gar kein Laserlicht (Intensität technisch Null) vorhanden. Auch derartige Speichenmuster sind besonders einfach zu erzeugen und auch einfach auszuwerten.

In einer bevorzugten Variante dieser Ausführungsform wird als Muster zumindest in einem Kreisring um die Zielachse ein Siemensstern als Speichenmuster erzeugt. Dies ist sinngemäß so zu verstehen, dass "weiße" Speichen des Sterns als erste konstante Intensität und "schwarze" Speichen als zweite konstante Intensität (z. B. Null) verstanden werden. Siemenssterne werden generell in der Technik weit verbreitet eingesetzt. Deren Erzeugung und Auswertung ist somit besonders einfach bzw. kann im Rahmen der Erfindung dann prinzipiell bzw. sinngemäß auf etablierte Maßnahmen aus der Praxis zurückgegriffen werden.

In einer bevorzugten Ausführungsform werden in zumindest zwei unterschiedlichen Kreisringen um die Zielachse unterschiedliche Teilmuster des Musters erzeugt. Die Teilmuster unterscheiden sich zum Beispiel bei Speichenmuster in der Speichenanzahl, zum Beispiel ist die Speichenanzahl in Radialrichtung für unterschiedliche Kreisringe zunehmend gewählt. Beispielsweise existieren drei Kreisring-Bereiche im Muster. Ein zentraler Kreisring oder Kreis beginnend an der Zielachse weist zum Beispiel als erstes Teilmuster acht Speichen auf, ein sich radial auswärts anschließender zweiter Kreisring ein zweites Teilmuster mit sechzehn Speichen und ein sich radial wiederum an diesen anschließender dritter Kreisring zweiunddreißig Speichen als drittes Teilmuster. Bei einem derartigen Muster ist auch für größere Radialabstände im Muster eine gute Auflösung in Bezug auf Umfangswinkel möglich.

In einer bevorzugten Ausführungsform wird das Muster erzeugt, indem in der Sendeeinheit einer Laserquelle eine Musterscheibe nachgeschaltet wird. Die Musterscheibe ist hinsichtlich Ihres Musters insbesondere unveränderlich. Die Definition des festen Musters, also dessen eigentliche Erzeugung erfolgt dann in der Musterscheibe. Das Laserlicht beinhaltet das entsprechende Muster noch nicht oder zumindest nur teilweise insbesondere gar nicht. Insbesondere wird also ein musterloses Laserlicht von der Laserquelle ausgestrahlt und erst ausschließlich durch die Musterscheibe das Muster aufgeprägt.

In einer bevorzugten Variante dieser Ausführungsform strahlt die Laserquelle ein Laserlicht in Form eines Laserdauerlichts aus. Dieses ist also insbesondere unmoduliert, gleichförmig bzw. weist konstante Intensität auf. So lässt sich eine Sendeeinheit besonders einfach herstellen.

In einer bevorzugten Variante dieser Ausführungsform wird das Muster erzeugt, indem die Musterscheibe um die Zielachse rotiert wird. Wie oben erwähnt, ist die Musterscheibe hinsichtlich des "festen" Musters invariant. Somit wird das Muster an sich ausschließlich durch die Beschaffenheit der Musterscheibe vorgegeben. Die Rotation des Musters wird ausschließlich durch die Rotation der Musterscheibe bewirkt. So können auch komplexe rotierende Muster besonders einfach erzeugt werden.

In einer bevorzugten Ausführungsform wird das Verfahren an einer Lenkmunition als Flugkörper durchgeführt. Somit steht für Lenkmunition ein kostengünstiges und unaufwändiges Lenkverfahren zur Verfügung und kann dort, insbesondere auch bei einer großen Menge an Lenkmustermunition, kostengünstig umgesetzt werden.

Die Aufgabe der Erfindung wird auch gelöst durch ein Verfahren gemäß Patentanspruch 12. Dieses dient zum Lenken eines Lenkflugkörpers auf eine Zielachse hin. Der Lenkflugkörper weist dabei ein Lenkmittel auf, zum Beispiel Steuerdüsen, bewegliche steuerbare Lenkflügel, Canards usw. Bei dem Verfahren wird das oben genannte erfindungsgemäße Verfahren für den Lenkflugkörper als Flugkörper ausgeführt. Das Lenkmittel wird dann abhängig von der ermittelten Relativlage - insbesondere in Radialrichtung - auf die Zielachse hin angesteuert. "Auf die Zielachse hin angesteuert" ist so zu verstehen, dass die Lenkmittel derart angesteuert werden, dass davon ausgegangen wird, dass sich der Flugkörper zur Zielachse hin bewegen wird, insbesondere auf kürzestem Weg, also in Radialrichtung in Bezug auf die Zielachse. Somit ist es in einfacher Weise möglich, eine Kurskorrektur für Lenkflugkörper, z. B. Lenkmunition, durchzuführen, um diese möglichst - zumindest auf einem Abschnitt ihrer Flugbahn - auf eine Soll-Flugbahn zu bringen oder zu halten, die der Zielachse entspricht. Die Zielgenauigkeit für Flugkörper kann so einfach und kostengünstig erhöht werden.

Das "Lenk"-Verfahren und zumindest ein Teil dessen möglicher Ausführungsformen sowie die jeweiligen Vorteile wurden sinngemäß bereits im Zusammenhang mit dem erfindungsgemäßen oben erläuterten "Ermittlungs"-Verfahren erläutert.

In einer bevorzugten Ausführungsform wird das Verfahren nur auf einem Teilabschnitt einer Flugbahn des Flugkörpers durchgeführt. Z. B. wird nur dort das Laserlenkfeld erzeugt bzw. der Flugkörper von diesem erreicht. Die Flugbahn beginnt wie oben erläutert an einem Startpunkt und endet an einem Zielpunkt. Der Teilabschnitt schließt insbesondere weder Startpunkt noch Zielpunkt der Flugbahn ein, bildet also ein entsprechendes Mittenstück der Flugbahn. Insbesondere ist das Mittenstück im Vergleich zur Länge der Flugbahn vergleichsweise kurz (insbesondere höchstens 60%, 40%, 30%, 20%) oder sehr kurz (insbesondere höchstens 10%, 5%, 1%) und dann in Form einer "Lokalisierungs- und Korrekturebene" ausgeführt. Die Flugbahnkorrektur erfolgt dann nur einmalig bzw. kurzfristig beim Passieren des Mittenstücks bzw. der Lokalisierungs- und Korrekturebene. Somit sind auch Flugbahnen korrigierbar, die zum Beispiel stark gekrümmt sind und nur teilweise im Bereich der Zielachse verlaufen oder zum Beispiel zu einem verdeckten Ziel führen, welches von der Sendeeinheit bzw. dem Leserlenkfeld nicht beleuchtbar ist, sodass der Flugkörper das Laserlenkfeld in beabsichtigter Weise zu einem bestimmten Zeitpunkt verlässt, zum Zielpunkt jedoch noch ein Stück weiter zu fliegen hat.

Die Aufgabe der Erfindung wird auch gelöst durch eine Flugkörperanordnung nach Patentanspruch 14. Diese enthält die oben genannte bzw. erfindungsgemäße Sendeeinheit. Diese ist dazu eingerichtet, das oben genannte Laserlenkfeld nach dem erfindungsgemäßen Verfahren auszustrahlen. Die Flugkörperanordnung enthält auch den oben genannten bzw. erfindungsgemäßen Flugkörper, insbesondere Lenkflugkörper. Dieser ist dazu eingerichtet, die oben genannte Relativlage nach dem erfindungsgemäßen Verfahren zu ermitteln.

Die Flugkörperanordnung und zumindest ein Teil deren möglicher Ausführungsformen sowie die jeweiligen Vorteile wurden sinngemäß bereits im Zusammenhang mit dem erfindungsgemäßen oben erläuterten "Ermittlungs"-Verfahren und "Lenk"-Verfahren erläutert.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere ein Verfahren zur in-situ-Ermittlung der Rollwinkellage und der Ablage in einem Flugkörper bzw. in einer Munition. Es ergibt sich ein optisches Verfahren zur gleichzeitigen Ermittlung der Rollwinkellage und der Ablage eines Flugkörpers. Der Flugkörper / die Munition bewegt sich hierfür in einem speziell zeitlich und räumlich modulierten Laserlenkfeld. Die Lageinformation (Relativlage) wird dabei on-board aus den Signalmodulationen (aktuelle Intensitäten des Laserlenkfeldes) mehrerer, am Boden / Heck des Flugkörpers / der Munition angeordneter Sensoren (Messpunkt) gewonnen.

Grundidee der Erfindung ist die Konzeption eines Laserlenkfeldverfahrens zur Lagebestimmung von Flugkörpern, insbesondere flügelstabilisierter Mittelkalibermunition mit Option zur Kurskorrektur.

In einem periodisch modulierten Laserstrahlmuster (Muster, Laserlenkfeld) messen die Sensoren (Detektion der aktuellen Intensitäten an den Messpunkten) aufgrund ihrer unterschiedlichen Lage im Raum (Messlagen zur Rollachse) zueinander phasenverschobene Signale. Die Phasenverschiebungen sind direkt proportional zur Differenz aus den Polarwinkeln der entsprechenden Sensoren (je zweier Messpunkte). Der Ursprung des Polarkoordinatensystems ist dabei der Mittelpunkt des erzeugten Laserstrahlmusters (Zielachse). Bei mindestens drei vorhandenen Sensoren (Messpunkten) und damit zwei Winkeldifferenzen (zwei Paare von Messpunkten) kann analog zum Verfahren der Triangulation die Ablage und die relative Rollwinkellage (Drehwinkel) des Flugkörpers zum Mittelpunkt des Laserstrahlmusters (Zielachse) mittels trigonometrischer Funktionen bestimmt werden.

Gemäß der Erfindung wird also insbesondere wie folgt vorgegangen:
Das bewegte Laserstrahlmuster wird mit einer einzelnen Laser-Sendeeinheit entlang der Zieltrajektorie des Flugkörpers projiziert, sodass der geometrische Mittelpunkt des Musters (Zielachse) mit der Zieltrajektorie zusammenfällt. Photosensoren, die in einer bekannten räumlichen Anordnung am Boden des Flugkörpers verteilt sind (Messpunkte), werden durch den Laser beleuchtet.

Im Folgenden wird von einer Intensitätsmodulation des Laserstrahlmusters ausgegangen, die periodisch mit dem Polarwinkel in einer senkrecht zur Strahlachse orientierten Ebene oszilliert. Eine solche Modulation kann beispielsweise durch ein rotierendes Speichenmuster erzeugt werden. Die Sensoren messen dann Signale gleicher Periode, die zueinander phasenverschoben sind. Der Phasenversatz zwischen zwei Signalen ist proportional zum Polarwinkel der von den beiden zugehörigen Sensoren und dem Mittelpunkt des Speichenmusters aufgespannt wird.

Mit den aus den Signalen gewonnenen Polarwinkeln zwischen je zwei Sensoren können mathematische Ausdrücke für die Positionen der Sensoren formuliert werden. Ab einer Anzahl von mindestens drei Sensoren in geeigneter Anordnung (z. B. in Umfangsrichtung möglichst weit radial außen um die Rollachse platziert, je 120° Versatz) ergibt sich daraus ein lösbares Gleichungssystem, in dem die Ablagen der Sensoren, also ihre radialen Abstände zum Mittelpunkt des Musters, sowie die Differenz aus Rollwinkel und Ablagewinkel als Unbekannte auftreten. Über die bekannte räumliche Anordnung der Sensoren (Messlagen) kann aus diesen Größen dann die relative Lage des Geschosses zum Mustermittelpunkt (Zielachse) und damit zur gewünschten Zieltrajektorie ermittelt werden.

Ein mögliches Ausführungsbeispiel der Erfindung ist die Verwendung in einem Laserlenkfeldverfahren für kurskorrigierte Mittelkalibermunition. Nach der Ermittlung von Rollwinkellage und Ablage kann hier die Abweichung von Ziel- und Ist-Trajektorie (Flugbahn) eines Geschosses bestimmt und mittels eines geeigneten Mechanismus (z. B. Impulselemente oder rollentkoppelte Canards) korrigiert werden.

Als Photosensoren können insbesondere drei Photodioden (Messpunkte) in Form eines gleichseitigen Dreiecks (Messlagen) um die Geschossachse (Rollachse) angeordnet, werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: das Verschießen eines Flugkörpers in Form einer Lenkmunition aus einer Waffe unter Benutzung des erfindungsgemäßen Verfahrens gemäß einer Prinzipdarstellung,
- Figur 2: einen Blick auf das Geschoss und das Laserlenkfeld bzw. dessen Muster in Richtung des Pfeils II in Figur 1, d. h. in Flugrichtung des Flugkörpers,
- Figur 3: ein alternatives Muster mit drei unterschiedlichen Kreisringen sowie symbolisch die Erzeugung des Laserlenkfeldes anhand einer Sendeeinheit.

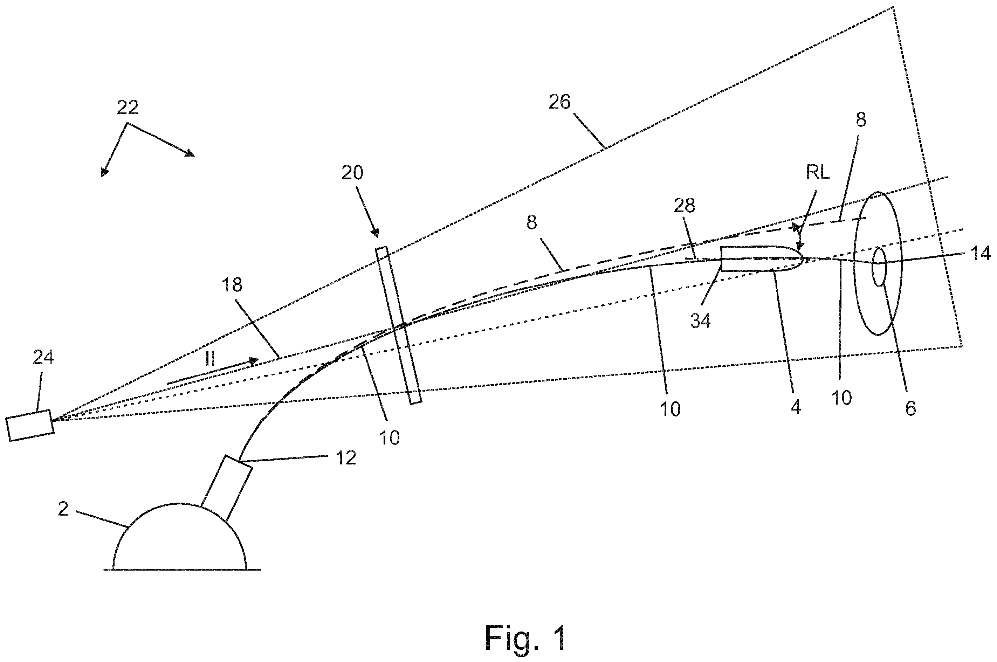

Figur 1 zeigt symbolisch, wie aus einer Waffe 2 ein Flugkörper 4, hier in Form einer Lenkmunition auf ein Ziel 6 hin abgefeuert wird, um dieses zu bekämpfen. Ohne Lenkeingriffe würde sich der Flugkörper 4 auf einer unkorrigierten Flugbahn 8 bewegen und das Ziel 6 verfehlen. Im Folgenden wird erläutert, wie der Flugkörper 4 daher eine korrigierte Flugbahn 10 einnimmt, um das Ziel 6 zu treffen.

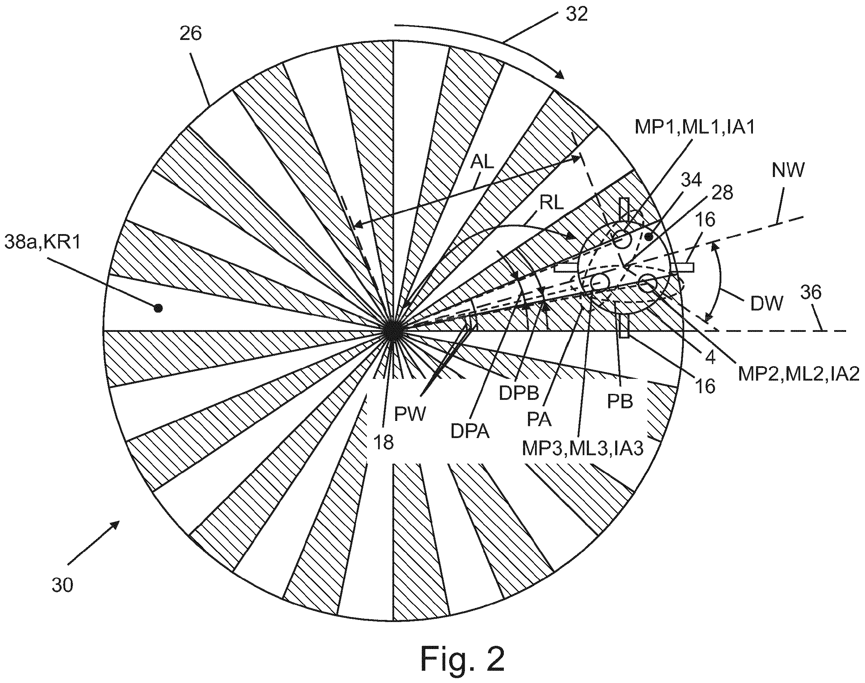

Die Flugbahn 10 (nur die nimmt der Flugkörper 4 tatsächlich ein) führt von einem Startpunkt 12 an der Waffe 2 zu einem Zielpunkt 14 am Ziel 6. Um von der unkorrigierten Flugbahn 8 auf die Flugbahn 10 zu gelangen, weist der Flugkörper 4 Lenkmittel 16 (in Figur 2 nur symbolisch angedeutet), hier steuerbare Lenkflügel, auf, die entsprechend betätigt werden, um die Flugbahnkorrektur durchzuführen. Die Lenkmittel 16 werden dabei abhängig von einer Relativlage RL des Flugkörpers 4 zu einer Zielachse 18 hin angesteuert. Die Ansteuerung erfolgt in Radialrichtung auf die Zielachse 18 hin, wobei dies vorliegend lediglich auf einem Abschnitt 20 der Flugbahn 8 bzw. 10 erfolgt. Dem liegt das Hintergrundwissen zu Grunde, dass ein Flug des Flugkörpers 4 auf dem entsprechenden Abschnitt 20 der Flugbahn 8 bzw. 10 ausreicht, um das Ziel 6 ausreichend genau zu treffen.

Um die entsprechende Flugbahnkorrektur durchzuführen, wird vorliegend eine Flugkörperanordnung 22 eingesetzt, die neben dem Flugkörper 4 auch eine Sendeeinheit 24 enthält. Der Flugkörper 4 ist dabei dazu eingerichtet, die Relativlage RL nach dem im Folgenden erläuterten Verfahren zu ermitteln. Die Sendeeinheit 24 ist dazu eingerichtet, ein Laserlenkfeld 26 entlang der Zielachse 18 auszustrahlen. Das bereits erwähnte Verfahren dient dazu, die Relativlage RL des Flugkörpers 4, der von der Sendeeinheit 24 wegfliegt und sich dabei zumindest in dem Abschnitt 20 in einem Sichtfeld (durch das Laserlenkfeld 26 symbolisch dargestellt) der Sendeeinheit 24 aufhält, in Bezug auf die Zielachse 18 zu ermitteln.

Der Flugkörper 4 weist eine Rollachse 28 auf. Im Beispiel rollt bzw. drallt die Lenkmunition um die Rollachse 28. Zumindest im und ein Wegstück nach dem Abschnitt 20 ist die Rollachse 28 im technischen bzw. ballistischen Sinne parallel zur Zielachse 18. Die Sendeeinheit 24 strahlt das Laserlenkfeld 26 entlang der Zielachse 18 aus. Dabei weist das Laserlenkfeld 26 ein Muster 30 (siehe Figur 2, im Querschnitt zur Zielachse 18) auf.

Figur 2 zeigt eine Querebene zur Zielachse 18 und damit eine Draufsicht auf das Laserlenkfeld 26 (dessen Querschnitt) in Richtung des Pfeils II aus Figur 1 im Teilabschnitt 20 zusammen mit dem Flugkörper 4, der den Teilabschnitt 20 gerade passiert. Gemäß dem Muster 30 variiert eine Intensität des Laserlenkfeldes 26 in Umfangsrichtung 32 (in Figur 2 durch einen Pfeil angedeutet) um die Zielachse 18. Figur 2 zeigt eine Augenblicksaufnahme des Musters 30, welches jedoch im Lauf der Zeit in seiner dargestellten Gesamtheit insgesamt ebenfalls in Richtung der Umfangsrichtung 32 (Pfeilrichtung) um die Zielachse 18 rotiert.

Von dem Flugkörper 4 ist dessen vom Laserlenkfeld 26 beleuchtete Seite 34, hier ein Boden bzw. Heck der Lenkmunition, zu sehen. Der Flugkörper 4 weist an dieser Seite 34 drei Messpunkte MP1 bis MP3 auf. An den drei Messpunkten MP1-3 wird die jeweilige aktuelle Intensität IA1-3 des Laserlenkfeldes 26 vom bzw. im Flugkörper 4 bzw. einer nicht näher erläuterten Sensorik erfasst. Drei Messlagen ML1 bis ML3 in Form von Relativlagen zur Rollachse 28 der Messpunkte MP1-3 am Flugkörper 4 in Bezug auf die Rollachse 28 sind bekannt. Mit anderen Worten ist diesbezüglich die Geometrie des Flugkörpers 4 soweit im Verfahren bekannt, dass die Lage der Messpunkte MP1-3 in den nachfolgend erläuterten Berechnungen ausreichend Berücksichtigung finden kann.

Anhand der drei aktuellen Intensitäten IA1-3 wird nach einem nicht näher erläuterten Verfahren wie folgt vorgegangen:
Zunächst werden zwei unterschiedliche Paare PA und PB (in der Figur gestrichelt umrahmt) aus den drei Messpunkten MP1-3 gewählt. Das Paar PA umfasst die Messpunkte MP1 und MP 3, das Paar PB die Messpunkte MP2 und MP3. Jeder Messpunkt MP1-3 zeichnet sich durch einen bestimmten aktuellen Polarwinkel PW in Bezug auf einen Nullwinkel 36 aus, der hier willkürlich gewählt ist. Für das Verfahren ist dieser Nullwinkel 36 bedeutungslos, denn es sind nicht die absoluten Polarwinkel PW, sondern nur deren jeweilige Differenz DPA,B der Polarwinkel PW im Paar PA und PB interessant. Diese beiden Differenzen DPA,B der Polarwinkel PW werden in beiden Paaren PA,B wie in Bezug auf die Zielachse 18 ermittelt.

Aus diesen Differenzen DPA,B kann in Kenntnis der geometrischen Verhältnisse bzw. Messlagen ML1-3 die Relativlage RL des Flugkörpers 4 zur Zielachse 18 ermittelt werden. Die Relativlage RL weist hier zwei Komponenten auf, nämlich zum einen eine Ablage AL (Abstand) der Rollachse 28 von der Zielachse 18 sowie einen Drehwinkel DW des Flugkörpers 4 um die Rollachse 28 in Bezug auf einen Nullwinkel NW, der hier als radial äußerer Teil (bzgl. Rollachse 28) eines Radialstrahls, ausgehend von der Zielachse 18 durch die Rollachse 28 gewählt ist.

Die Ermittlung der Relativlage RL wird ausschließlich im Flugkörper 4 durchgeführt.

Das Muster 30 ist im Beispiel einheitlich für einen einzigen Kreisring KR1, der hier zu einem Vollkreis entartet ist (Innenradius Null), um die Zielachse 18 ausgeführt. Der Kreisring KR1 füllt den gesamten Querschnitt der Laserlenkfeldes 26 aus. Es handelt sich um ein in Umfangsrichtung 32 regelmäßiges Muster, nämlich gleich breite Streifen und Lücken in Form eines Speichenmusters, hier eines Siemenssterns.

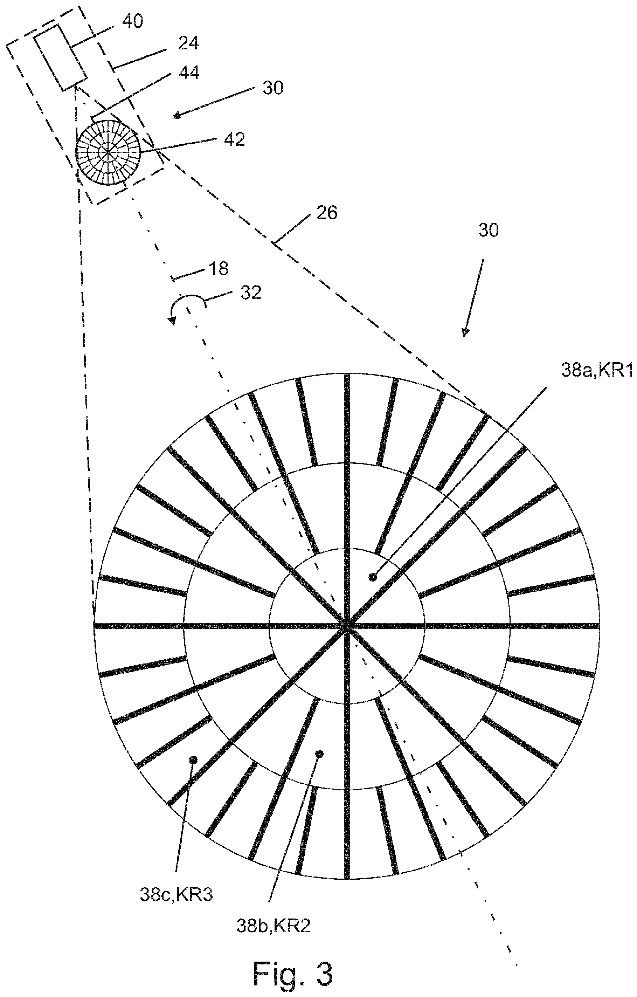

Figur 3 zeigt ein alternatives Muster 30. Dieses weist insgesamt drei Kreisringe KR1-3 auf. Der Kreisring KR1 ist wieder ein zum einem Vollkreis entarteter Kreisring, der am Mittelpunkt, also der Zielachse 18 beginnt. Dieser weist insgesamt acht Speichen eines Speichenmusters auf. Der sich radial außen anschließende Kreisring KR2 weist dagegen sechzehn Speichen, der sich noch zuletzt anschließende Kreisring KR3 zweiunddreißig Speichen. Somit sind in den unterschiedlichen Kreisringen KR1-3 unterschiedliche Teilmuster 38a-c des Musters 30 erzeugt.

Figur 3 illustriert auch, wie im Beispiel das Muster 30 erzeugt wird. Dies geschieht nämlich, indem in der Sendeeinheit 24 einer Laserquelle 40 eine Musterscheibe 42 nachgeschaltet wird. Diese befindet sich somit im Strahlengang von Laserlicht 44, welches hier als Laserdauerlicht unmoduliert mit konstanter Helligkeit bzw. Intensität von der Laserquelle 40 ausgestrahlt wird. Die Musterscheibe 42 trägt hier ein lithographisch aufgebrachtes Muster, um in den jeweiligen Lücken zwischen zwei Speichen das Laserlicht durchzulassen (homogene Intensität) und an den Speichen zu blockieren, sodass hier im Muster 30 kein Laserlicht 44 (Intensität Null) vorhanden ist. Die Musterscheibe 42 erzeugt somit das "starre" Muster 30 an sich. Die Rotation des Musters 30 um die Zielachse 18 wird dadurch bewerkstelligt, dass die Musterscheibe 42 um die Zielachse 18 rotiert wird.

Das beschriebene Verfahren wird also an einer Lenkmunition als Flugkörper 4 durchgeführt.

### Bezugszeichenliste

- 2: Waffe
- 4: Flugkörper
- 6: Ziel
- 8: Flugbahn (unkorrigiert)
- 10: Flugbahn (korrigiert)
- 12: Startpunkt
- 14: Zielpunkt
- 16: Lenkmittel
- 18: Zielachse
- 20: Abschnitt (Flugbahn)
- 22: Flugkörperanordnung
- 24: Sendeeinheit
- 26: Laserlenkfeld
- 28: Rollachse
- 30: Muster
- 32: Umfangsrichtung
- 34: Seite (beleuchtet)
- 36: Nullwinkel (Polarwinkel)
- 38a-c: Teilmuster
- 40: Laserquelle
- 42: Musterscheibe
- 44: Laserlicht
- RL: Relativlage
- MP1-3: Messpunkt
- ML1-3: Messlage
- IA1-3: Intensität (aktuell)
- PA,PB: Paar
- PW: Polarwinkel
- DPA,DPB: Differenz (Polwinkel)
- AL: Ablage
- DW: Drehwinkel
- NW: Nullwinkel (Drehwinkel)
- KR1-3: Kreisring

## Patentansprüche

1. Verfahren zur Ermittlung einer Relativlage (RL) eines sich zumindest auf einem Abschnitt (20) seiner Flugbahn (10) in einem Sichtfeld einer Sendeeinheit (24) für ein Laserlenkfeld (26) aufhaltenden Flugkörpers (4) in Bezug auf eine Zielachse (18), wobei der Flugkörper (4) eine Rollachse (28) aufweist, bei dem:
- die Sendeeinheit (24) das Laserlenkfeld (26) entlang der Zielachse (18) ausstrahlt, wobei das Laserlenkfeld (26) ein periodisch moduliertes Muster (30) aufweist, gemäß dem eine Intensität des Laserlenkfelds (26) in Umfangsrichtung (32) um die Zielachse (18) variiert, und wobei das Muster (30) um die Zielachse (18) rotiert,
- an einer potentiell von dem Laserlenkfeld (26) beleuchteten Seite (34) des Flugkörpers (4) an drei unterschiedlichen Messpunkten (MP1-3) die jeweilige aktuelle Intensität (IA1-3) des Laserlenkfelds (26) erfasst wird, indem mit Sensoren an den Messpunkten zueinander phasenverschobene Signale gleicher Periode gemessen werden, deren Phasenverschiebungen direkt proportional zur Differenz aus den Polarwinkeln der entsprechenden Sensoren sind, wobei drei Messlagen (ML1-3) der Messpunkte (MP1-3) am Flugkörper (4) in Bezug auf die Rollachse (28) bekannt sind,
- aus den drei aktuellen Intensitäten (IA1-3) und den drei Messlagen (ML1-3) für wenigstens zwei verschiedene Paare (PA,B) der drei Messpunkte (MP1-3) eine Differenz (DPA,B) von Polarwinkeln (PW) der beiden Messpunkte (MP1-3) des jeweiligen Paares (PA,B) in Bezug auf die Zielachse (18) ermittelt wird,
- als Relativlage (RL) hieraus die Ablage (AL) der Rollachse (28) von der Zielachse (18) und der Drehwinkel (DW) des Flugkörpers (4) um die Rollachse (28) in Bezug auf einen Nullwinkel (NW) analog zum Verfahren der Triangulation mittels trigonometrischer Funktionen ermittelt wird.

2. Verfahren nach Anspruch 1,
**dadurch gekennzeichnet,**
**dass** die Ermittlung der Relativlage (RL) ausschließlich im Flugkörper (4) durchgeführt wird.

3. Verfahren nach einem der vorhergehenden Ansprüche,
**dadurch gekennzeichnet,**
**dass** als von der Sendeeinheit (24) potentiell beleuchtete Seite (34) des Flugkörpers (4) dessen Boden oder Heck gewählt wird.

4. Verfahren nach einem der vorhergehenden Ansprüche,
**dadurch gekennzeichnet,**
**dass** als Muster (30) zumindest in einem Kreisring (KR1-3) um die Zielachse (18) ein im Umfangsrichtung (32) regelmäßiges Muster erzeugt wird.

5. Verfahren nach einem der vorhergehenden Ansprüche,
**dadurch gekennzeichnet,**
**dass** als Muster (30) zumindest in einem Kreisring (KR1-3) um die Zielachse (18) ein Speichenmuster erzeugt wird.

6. Verfahren nach Anspruch 5,
**dadurch gekennzeichnet,**
**dass** als Muster (30) zumindest in einem Kreisring (KR1-3) um die Zielachse (18) ein Siemensstern als Speichenmuster erzeugt wird.

7. Verfahren nach einem der vorhergehenden Ansprüche,
**dadurch gekennzeichnet,**
**dass** in zumindest zwei unterschiedlichen Kreisringen (KR1-3) um die Zielachse (18) unterschiedliche Teilmuster (38a-c) des Musters (30) erzeugt werden.

8. Verfahren nach einem der vorhergehenden Ansprüche,
**dadurch gekennzeichnet,**
**dass** das Muster (30) erzeugt wird, indem in der Sendeeinheit (24) einer Laserquelle (40) eine Musterscheibe (42) nachgeschaltet wird.

9. Verfahren nach Anspruch 8,
**dadurch gekennzeichnet,**
**dass** die Laserquelle (40) ein Laserlicht (44) in Form eines Laserdauerlichts ausstrahlt.

10. Verfahren nach einem der Ansprüche 8 bis 9,
**dadurch gekennzeichnet,**
**dass** das Muster (30) erzeugt wird, indem die Musterscheibe (42) um die Zielachse (18) rotiert wird.

11. Verfahren nach einem der vorhergehenden Ansprüche,
**dadurch gekennzeichnet,**
**dass** das Verfahren an einer Lenkmunition als Flugkörper (4) durchgeführt wird.

12. Verfahren zum Lenken eines wenigstens ein Lenkmittel (16) aufweisenden Lenkflugkörpers (4) auf eine Zielachse (18) hin, bei dem:
- das Verfahren nach einem der vorhergehenden Ansprüche für den Lenkflugkörper als Flugkörper (4) ausgeführt wird,
- das Lenkmittel (16) abhängig von der Relativlage (RL) auf die Zielachse (18) hin angesteuert wird.

13. Verfahren nach Anspruch 12,
**dadurch gekennzeichnet,**
**dass** das Verfahren nur auf einem Abschnitt (20) einer Flugbahn (10) des Flugkörpers (4) von einem Startpunkt (12) zu einem Zielpunkt (14) durchgeführt wird.

14. Flugkörperanordnung (22),
- mit einer Sendeeinheit (24), die dazu eingerichtet ist, ein Laserlenkfeld (26) nach dem Verfahren nach einem der Ansprüche 1-11 auszustrahlen,
- mit einem Flugkörper (4), der dazu eingerichtet ist, eine Relativlage (RL) nach dem Verfahren nach einem der Ansprüche 1-11 zu ermitteln.

## Claims

1. Method for determining a relative position (RL) of a missile (4) with respect to a target axis (18), with the missile (4) having a roll axis (28) and, over at least one section (20) of the trajectory (10) of said missile, being located in a field of view of a transmitting unit (24) for a laser guidance field (26), wherein:
- the transmitting unit (24) emits the laser guidance field (26) along the target axis (18), with the laser guidance field (26) including a periodically modulated pattern (30), according to which an intensity of the laser guidance field (26) varies in the circumferential direction (32) around the target axis (18), and with the pattern (30) rotating around the target axis (18),
- the respective instantaneous intensity (IA1-3) of the laser guidance field (26) is detected at three different measurement points (MP1-3), which are on a side (34) of the missile (4) potentially illuminated by the laser guidance field (26), by using sensors at the measurement points to measure signals of the same period which are phase-shifted with respect to one another, the phase shifts of said signals being directly proportional to the difference between the polar angles of the corresponding sensors, with three measurement positions (ML1-3) of the measurement points (MP1-3) on the missile (4) being known with respect to the roll axis (28),
- the three instantaneous intensities (IA1-3) and the three measurement positions (ML1-3) for at least two different pairs (PA,B) of the three measurement points (MP1-3) are used to determine a difference (DPA,B) between polar angles (PW) of the two measurement points (MP1-3) of the respective pair (PA,B) with respect to the target axis (18),
- the offset (AL) of the roll axis (28) from the target axis (18) and the angle of rotation (DW) of the missile (4) around the roll axis (28) with respect to a zero angle (NW) are determined as the relative position (RL) in a manner analogous to the method of triangulation by means of trigonometric functions.

2. Method according to Claim 1,
**characterized**
**in that** determination of the relative position (RL) is performed exclusively in the missile (4).

3. Method according to either of the preceding claims, **characterized**
**in that** the bottom or tail of the missile (4) is chosen as the side (34) of said missile potentially illuminated by the transmitting unit (24).

4. Method according to any of the preceding claims, **characterized**
**in that** a regular pattern in the circumferential direction (32) is generated as the pattern (30) at least in one annulus (KR1-3) around the target axis (18).

5. Method according to any of the preceding claims, **characterized**
**in that** a spoke pattern is generated as the pattern (30) at least in one annulus (KR1-3) around the target axis (18).

6. Method according to Claim 5,
**characterized**
**in that** a Siemens star as a spoke pattern is generated as the pattern (30) at least in one annulus (KR1-3) around the target axis (18).

7. Method according to any of the preceding claims, **characterized**
**in that** different partial patterns (38a-c) of the pattern (30) are generated in at least two different annuli (KR1-3) around the target axis (18).

8. Method according to any of the preceding claims, **characterized**
**in that** the pattern (30) is generated by introducing a pattern disk (42) downstream of a laser source (40) in the transmitting unit (24).

9. Method according to Claim 8,
**characterized**
**in that** the laser source (40) emits a laser light (44) in the form of a continuous-wave laser light.

10. Method according to either of Claims 8 and 9, **characterized**
**in that** the pattern (30) is generated by rotating the pattern disk (42) around the target axis (18).

11. Method according to any of the preceding claims, **characterized**
**in that** the method is performed for a guided munition as a missile (4).

12. Method for steering a guided missile (4) with at least one guidance means (16) towards a target axis (18), wherein:
- the method according to any of the preceding claims is performed for the guided missile as the missile (4),
- the guidance means (16) is guided towards the target axis (18) depending on the relative position (RL).

13. Method according to Claim 12,
**characterized**
**in that** the method is performed only for a section (20) of a trajectory (10) of the missile (4) from a launch point (12) to a target point (14).

14. Missile assembly (22),
- having a transmitting unit (24) configured to emit a laser guidance field (26) in accordance with the method according to any of Claims 1-11,
- having a missile (4) configured to determine a relative position (RL) in accordance with the method according to any of Claims 1-11.

## Revendications

1. Procédé de détermination d'une position relative (RL) d'un missile (4) se situant, au moins sur un tronçon (20) de sa trajectoire (10), dans un champ de vision d'une unité d'émission (24) pour un champ de guidage laser (26) par rapport à un axe cible (18), le missile (4) présentant un axe de roulis (28), dans lequel :
- l'unité d'émission (24) rayonne le champ de guidage laser (26) le long de l'axe cible (18), le champ de guidage laser (26) présentant un motif modulé périodiquement (30) selon lequel une intensité du champ de guidage laser (26) varie dans la direction circonférentielle (32) autour de l'axe cible (18), et le motif (30) tournant autour de l'axe cible (18),
- sur un côté (34) du missile (4) potentiellement éclairé par le champ de guidage laser (26), l'intensité actuelle respective (IA1-3) du champ de guidage laser (26) est détectée en trois points de mesure différents (MP1-3) en mesurant, au moyen de capteurs situés aux points de mesure, des signaux déphasés les uns par rapport aux autres et de même période, dont les déphasages sont directement proportionnels à la différence entre les angles polaires des capteurs correspondants, trois positions de mesure (ML1-3) des points de mesure (MP1-3) sur le missile (4) étant connues par rapport à l'axe de roulis (28),
- à partir des trois intensités actuelles (IA1-3) et des trois positions de mesure (ML1-3), une différence (DPA,B) d'angles polaires (PW) des deux points de mesure (MP1-3) de la paire respective (PA,B) par rapport à l'axe cible (18) est déterminée pour au moins deux paires différentes (PA,B) des trois points de mesure (MP1-3),
- à partir de celle-ci, l'écart (AL) de l'axe de roulis (28) par rapport à l'axe de cible (18) et l'angle de rotation (DW) du missile (4) autour de l'axe de roulis (28) par rapport à un angle nul (NW) sont déterminés, en tant que position relative (RL) de manière analogue au procédé de triangulation au moyen de fonctions trigonométriques.

2. Procédé selon la revendication 1,
**caractérisé**
**en ce que** la détermination de la position relative (RL) est effectuée exclusivement dans le missile (4).

3. Procédé selon l'une des revendications précédentes, **caractérisé**
**en ce que** le culot ou l'empennage est choisi comme côté (34) du missile (4) potentiellement éclairé par l'unité d'émission (24).

4. Procédé selon l'une des revendications précédentes, **caractérisé**
**en ce qu'**en tant que motif (30), un motif régulier dans la direction circonférentielle (32) est généré au moins dans un anneau circulaire (KR1-3) autour de l'axe cible (18).

5. Procédé selon l'une des revendications précédentes, **caractérisé**
**en ce que**, en tant que motif (30), un motif à rayons est généré au moins dans un anneau circulaire (KR1-3) autour de l'axe cible (18).

6. Procédé selon la revendication 5,
**caractérisé**
**en ce que**, en tant que motif (30), une étoile de Siemens est générée sous forme de motif à rayons au moins dans un anneau circulaire (KR1-3) autour de l'axe cible (18).

7. Procédé selon l'une des revendications précédentes, **caractérisé**
**en ce que** différents motifs partiels (38a-c) du motif (30) sont générés dans au moins deux anneaux circulaires (KR1-3) différents autour de l'axe cible (18).

8. Procédé selon l'une des revendications précédentes, **caractérisé**
**en ce que** le motif (30) est généré par le fait qu'un disque à motifs (42) est monté en aval d'une source laser (40) dans l'unité d'émission (24).

9. Procédé selon la revendication 8,
**caractérisé**
**en ce que** la source laser (40) émet une lumière laser (44) sous la forme d'une lumière laser continue.

10. Procédé selon l'une des revendications 8 à 9,
**caractérisé**
**en ce que** le motif (30) est généré en faisant tourner le disque à motifs (42) autour de l'axe cible (18).

11. Procédé selon l'une des revendications précédentes, **caractérisé**
**en ce que** le procédé est mis en œuvre sur une munition guidée en tant que missile (4).

12. Procédé de guidage d'un missile guidé (4) comportant au moins un moyen de guidage (16) vers un axe cible (18), dans lequel :
- le procédé selon l'une des revendications précédentes est mis en œuvre pour le missile guidé en tant que missile (4),
- le moyen de guidage (16) est piloté en fonction de la position relative (RL) vers l'axe cible (18).

13. Procédé selon la revendication 12,
**caractérisé**
**en ce que** le procédé n'est mis en œuvre que sur un tronçon (20) d'une trajectoire (10) du missile (4) allant d'un point de départ (12) à un point cible (14).

14. Agencement de missile (22),
- comprenant une unité d'émission (24) qui est conçue pour rayonner un champ de guidage laser (26) conformément au procédé selon l'une des revendications 1 à 11,
- comprenant un missile (4) qui est conçu pour déterminer une position relative (RL) conformément au procédé selon l'une des revendications 1 à 11.
